(19) **Europäisches Patentamt**

**European Patent Office**

**Office européen des brevets**

(11) Veröffentlichungsnummer: **0 236 869**
**A1**

## (12) EUROPÄISCHE PATENTANMELDUNG

(21) Anmeldenummer: **87102762.9**

(22) Anmeldetag: **26.02.87**

(51) Int. Cl.⁴: **H04N 5/63**

(30) Priorität: **01.03.86 DE 3606736**

(43) Veröffentlichungstag der Anmeldung:
**16.09.87 Patentblatt 87/38**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Schmadel, Karl-Hans**
**Mozartstrasse 2**
**D-3201 Diekholzen 3(DE)**
Erfinder: **Schiller, Wilfried**
**Elly-Heuss-Knapp-Weg 21**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Schaltungsanordnung zur Erzeugung einer Heizspannung für eine Bildröhre.

㊼ Bei einer Schaltungsanordnung zur Erzeugung einer Heizspannung für eine Bildröhre (2) in einem Gerät, für welches ein Bereitschaftszustand und ein Betriebszustand vorgesehen sind, ist der Heizfaden - (1) der Bildröhre (2) in Reihe mit einem Vorwiderstand (41, .... 4n) an eine erste Spannungsquelle (3) angeschlossen, welche während des Bereitschaftszustandes und des Betriebszustandes eingeschaltet ist. Der Vorwiderstand (41, .... 4n) ist mit einem steuerbaren Schalter (14) überbrückbar, dessen Steuereingang mit einem Schaltungspunkt (11) verbunden ist, welcher in Abhängigkeit vom Vorliegen des Betriebszustandes Spannung führt. Vorzugsweise wird der Vorwiderstand (41, .... 4n) aus einer oder mehreren in Reihe geschalteten Dioden gebildet.

EP 0 236 869 A1

## Schaltungsanordnung zur Erzeugung einer Heizspannung für eine Bildröhre

Die Erfindung geht aus von einer Schaltungsanordnung nach der Gattung des Hauptanspruchs.

Um Geräte mit Bildröhren, also Fernsehgeräte, Monitore und Datensichtgeräte, möglichst schnell bei Bedarf in den Betriebszustand versetzen zu können, ist es bekannt, während eines Bereitschaftszustandes die Bildröhre vorzuheizen. Dazu wird dem Heizfaden während des Bereitschaftszustandes eine verminderte Spannung zugeführt, welche etwa 70 % des Wertes für die volle Heizleistung aufweist. Bei bekannten Schaltungen ist für den Betriebszustand und für den Bereitschaftszustand jeweils eine Spannungsquelle für die Heizung vorgesehen. Dieses hat unter anderem den Nachteil, daß beide Spannungsquellen für die jeweils erforderliche Leistung ausgelegt sein müssen, wobei jedoch nur eine Spannungsquelle zur Zeit benötigt wird.

Bei modernen Geräten werden ferner Betriebsspannungen für einzelne Schaltungen durch Wandlung der dem Gerät zugeführten Spannung erzeugt. Die dafür vorgesehenen Wandler werden meistens mit Zeilenfrequenz betrieben. Insbesondere bei Geräten mit umschaltbarer Zeilenfrequenz ergeben sich unerwünschte Änderungen der jeweils erzeugten Spannungen, so daß in diesen Fällen im Betriebszustand die Heizleistung in unerwünschter Weise von der Zeilenfrequenz abhängt.

Die erfindungsgemäße Schaltungsanordnung mit den kennzeichnenden Merkmalen des Hauptanspruchs hat demgegenüber den Vorteil, daß lediglich eine Spannungsquelle zur Aufbringung der Heizleistung erforderlich ist und daß die Heizleistung während des Betriebszustandes unabhängig von weiteren Betriebsbedingungen ist, wie beispielsweise der Zeilenfrequenz.

Durch die in den Unteransprüchen aufgeführten Maßnahmen sind vorteilhafte Weiterbildungen und Verbesserungen der im Hauptanspruch angegebenen Erfindung möglich.

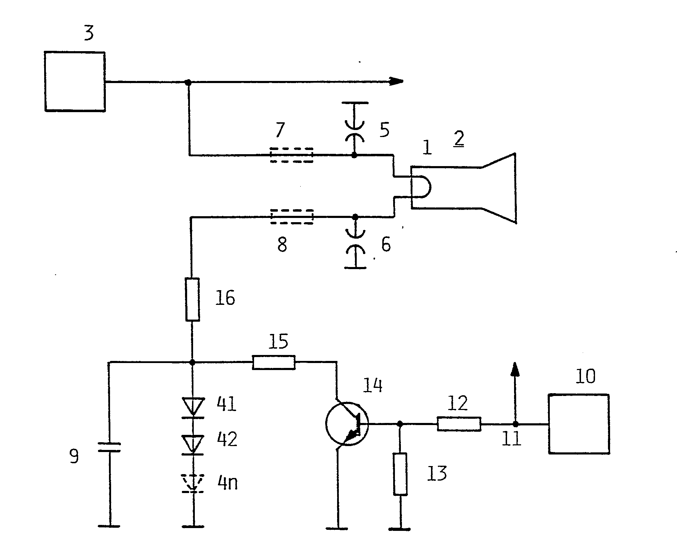

Ein Ausführungsbeispiel der Erfindung ist in der Zeichnung dargestellt und in der nachfolgenden Beschreibung näher erläutert.

Das in der Figur dargestellte Schaltbild zeigt lediglich die zum Verständnis der Erfindung notwendigen Teile. Weitere zum Betrieb des Gerätes, beispielsweise eines Monitores oder eines Datensichtgerätes, erforderliche Schaltungen können als bekannt vorausgesetzt werden und sind in der Figur nicht dargestellt.

Der Heizfaden 1 der Bildröhre 2 wird aus einer Spannungsquelle 3 mit Betriebsspannung versorgt. Die Spannungsquelle 3 ist sowohl während des Betriebsals auch während des Bereitschaftszustandes eingeschaltet. Sie besteht beispielsweise aus einem Netztransformator geringer Leistung, einem Gleichrichter und einer einfachen Spannungsstabilisierungsschaltung, die als integrierter Schaltkreis auf dem Markt preiswert erhältlich ist. Bei Datensichtgeräten kann die Spannungsquelle 3 auch mit derjenigen eines Computers zusammengefaßt sein. Die Ausgangsspannung der Betriebsspannungsquelle 3 ist weitgehend unabhängig von Betriebsparametern des Gerätes, wie beispielsweise der Zeilenfrequenz. Der Pfeil am Ausgang der Spannungsquelle 3 deutet an, daß noch andere Schaltungsteile von der Spannungsquelle 3 versorgt werden können.

Zur Reduzierung der Heizleistung während des Bereitschaftszustandes sind in Reihe mit dem Heizfaden 1 Dioden 41, 42 bis 4n geschaltet. Die Anzahl der Dioden richtet sich jeweils nach der Höhe der gesamten Betriebsspannung und der erforderlichen Reduzierung der Heizleistung. Anstelle der Dioden könnte an sich auch in vorteilhafter Weise ein Widerstand verwendet werden. Durch die Verwendung von Dioden wird jedoch die herabgesetzte Spannung sehr stabil, da die Dioden gemäß ihrer gekrümmten Kennlinie einen geringen dynamischen Innenwiderstand -vom Heizfaden aus gesehen -darstellen.

Beide Anschlüsse des Heizfadens 1 sind mit jeweils einer Funkenstrecke 5, 6 versehen, um Hochspannungsüberschläge, welche in der Bildröhre stattfinden, abzuleiten. Zum Schutz der übrigen Schaltelemente sind Induktivitäten 7, 8 in den Zuleitungen zum Heizfaden angeordnet, welche die bei Überschlägen entstehenden sehr hohen Spannungsspitzen dämpfen. Ferner dient ein Kondensator 9 zum Schutz der Dioden 41 bis 4n. Mit Hilfe eines weiteren Widerstandes 16 können Streuungen ausgeglichen werden.

Wird das Gerät in den Betriebszustand geschaltet, so entsteht am Ausgang 11 der zweiten Spannungsquelle 10 eine Betriebsspannung, welche auch für verschiedene andere Schaltungen des Gerätes verwendet werden kann. Über den Spannungsteiler 12, 13 gelangt die Ausgangsspannung der Spannungsquelle 10 zur Basis des Transistors 14 und schaltet diesen in den leitenden Zustand. Damit wird die Spannung am Heizfaden 1 auf den zum Betrieb erforderlichen Wert heraufgesetzt. In die Kollektorzuleitung des Transistors 14 kann ein dritter Widerstand 15 eingeschaltet sein, um die Spannungsdifferenz zwischen dem Betriebs-und dem Bereitschaftszustand gegebenenfalls einstellen zu können.

Anstelle des Transistors kann auch ein Thyristor verwendet werden. Bei einem Heizfaden, welcher für eine Heizspannung von 4,75 V vorgesehen ist, kann beispielsweise die Ausgangsspannung der ersten Spannungsquelle 5 V betragen, welche durch die Verwendung von zwei Dioden 41 und 42 auf ca. 3,5 V (ca. 70 %) herabgesetzt wird. Beim Betriebszustand liegt dann am Heizfaden eine Spannung von etwa 4,75 V.

Die Erfindung kann auch dadurch verwirklicht werden, daß der Basis des Transistors 14 eine andere vom Vorliegen des Betriebszustandes abhängige Spannung zugeführt wird, beispielsweise eine Schaltspannung, welche dem Gerät zur Einschältung des Betriebszustandes zugeleitet wird.

## Ansprüche

1. Schaltungsanordnung zur Erzeugung einer Heizspannung für eine Bildröhre in einem Gerät, für welches ein Bereitschaftszustand und ein Betriebszustand vorgesehen sind, dadurch gekennzeichnet, daß der Heizfaden (1) der Bildröhre (2) in Reihe mit einem Vorwiderstand (41 bis 4n) an eine erste Spannungsquelle (3) angeschlossen ist, welche während des Bereitschaftszustandes und des Betriebszustandes eingeschaltet ist, und daß der Vorwiderstand (41 bis 4n) mit einem steuerbaren Schalter (14) überbrückbar ist, dessen Steuereingang mit einem Schaltungspunkt (11) verbunden ist, welcher in Abhängigkeit vom Vorliegen des Betriebszustandes Spannung führt.

2. Schaltungsanordnung nach Anspruch 1, dadurch gekennzeichnet, daß der Vorwiderstand - (41 bis 4n) von mindestens einer Diode (41) gebildet ist.

3. Schaltungsanordnung nach Anspruch 2, dadurch gekennzeichnet, daß mehrere Dioden (41 bis 4n) in Reihe geschaltet sind.

4. Schaltungsanordnung nach einem der vorhergehenden Anspruche, dadurch gekennzeichnet, daß der Schaltungspunkt (11) der Ausgang einer zweiten Spannungsquelle (10) ist, welche im Betriebszustand des Gerätes eingeschaltet ist.

5. Schaltungsanordnung nach Anspruch 1, dadurch gekennzeichnet, daß zwischen dem Vorwiderstand (41 bis 4n) und dem Heizfaden (1) ein weiterer Widerstand (16) angeordnet ist.

6. Schaltungsanordnung nach Anspruch 1, dadurch gekennzeichnet, daß in Reihe mit dem steuerbaren Schalter (14) ein dritter Widerstand - (15) angeordnet ist.

7. Schaltungsanordnung nach Anspruch 1, dadurch gekennzeichnet, daß der steuerbare Schalter (14) ein Halbleiterschalter ist.

8. Schaltungsanordnung nach Anspruch 7, dadurch gekennzeichnet, daß der Halbleiterschalter ein Transistor (14) ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X<br>Y | SIEMENS-BAUTEILE-INFORMATIONEN, 10 (1972), Heft 3, Berlin, München<br><br>PETER SAUBER "Optimaler Bedienungskomfort für Fernsehgeräte"<br>Seiten 55, 56<br><br>  * Seite 55, rechte Spalte, letzter Absatz - Seite 56, linke Spalte, letzter Absatz; Bild 2 *<br><br>-- | 1,4<br>7,8 | H 04 N 5/63 |
| Y | WILHELM BENZ "Elektrische und elektronische Schaltelemente", 4. Auflage, Band 1, 1973<br><br>BOHMANN-NOLTEMEYER VERLAG Dossenheim-Heidelberg Seiten 153, 154<br><br>  * Seite 153, Kapitelüberschrift "Der Transistor als Schalter"<br><br>-- | 7,8<br><br><br><br>* | |
| A | US - A - 3 171 084 (SZIKLAI)<br><br>  * Fig. 2 *<br><br>---- | 1,2 | |

**RECHERCHIERTE SACHGEBIETE (Int. Cl.4)**

H 04 N 3/00

H 04 N 5/00

Der vorliegende Recherchenbericht wurde für alle Patentansprüche erstellt.

| Recherchenort | Abschlußdatum der Recherche | Prüfer |
|---|---|---|
| WIEN | 02-06-1987 | BENISCHKA |